**Europäisches Patentamt**

**European Patent Office**

**Office européen des brevets**

(19)

(11) Veröffentlichungsnummer: **0 229 266 B1**

# EUROPÄISCHE PATENTSCHRIFT

(12)

(45) Veröffentlichungstag der Patentschrift:
**17.10.90**

(21) Anmeldenummer: **86116220.4**

(22) Anmeldetag: **22.11.86**

(51) Int. Cl.⁵: **A61C 13/00**, A61C 11/00,
A61C 19/04

(54) Verfahren zum Rekonstruieren von Zähnen eines Oberkiefers.

(30) Priorität: **29.11.85 DE 3542177**

(43) Veröffentlichungstag der Anmeldung:
**22.07.87 Patentblatt 87/30**

(45) Bekanntmachung des Hinweises auf die Patenterteilung:
**17.10.90 Patentblatt 90/42**

(84) Benannte Vertragsstaaten:
**AT BE CH DE ES FR GB IT LI LU NL SE**

(56) Entgegenhaltungen:
**EP-A- 0 025 911**
**EP-A- 0 054 785**
**DE-A- 3 123 526**
**DE-A- 3 135 122**

(73) Patentinhaber: **Kubein-Meesenburg, Dietmar, Prof. Dr.,
Rodetal 36, D-3406 Bovenden(DE)**
Patentinhaber: **Meyer, Georg, Dr. med. dent,
Emilienstrasse 11, D-3400 Göttingen(DE)**
Patentinhaber: **Bücking, Wolfram, Dr., Buchweg 14,
D-7988 Wangen(DE)**

(72) Erfinder: **Kubein-Meesenburg, Dietmar, Prof. Dr.,
Rodetal 36, D-3406 Bovenden(DE)**
Erfinder: **Meyer, Georg, Dr. med. dent.,
Emilienstrasse 11, D-3400 Göttingen(DE)**
Erfinder: **Bücking, Wolfram, Dr., Buchweg 14,
D-7988 Wangen(DE)**
Erfinder: **Nägerl, Hans, Dr., Lange Hecke 41,
D-3407 Gleichen OT Klein Lengden(DE)**

(74) Vertreter: **Patentanwälte Dr. Solf & Zapf,
Schlossbleiche 20 Postfach 13 01 13,
D-5600 Wuppertal 1(DE)**

**Beschreibung**

Die vorliegende Erfindung betrifft ein Verfahren zur Rekonstruktion von Frontzähnen des Oberkiefers, wobei Modellabdrücke des Ober- und Unterkiefers ohne den oder die zu rekonstruierenden Zähne in ihrer natürlichen Relation bezogen zu den Gelenken (Kondylen) und den skelettalen Schädelstrukturen in einem Artikulator eingesetzt und die zu rekonstruierenden Zähne modelliert werden.

Bei der Rekonstruktion von Zähnen können die verschiedensten Verfahren angewandt werden. Üblicherweise wird von dem zu behandelnden Patienten zunächst ein Abdruck des Ober- und Unterkiefers genommen und damit ein Gipsmodell seines Ober- und Unterkiefers erstellt. Dieses wird dann in einen Artikulator eingesetzt, so daß verschiedene Bewegungen am Modell nachvollzogen werden können, so daß dann ein zu erstellender Zahnersatz, wie beispielsweise Kronen, Teil- oder Vollprothesen oder dergleichen, bereits am Gipsmodell an die speziellen Erforderenisse des Patienten angepaßt und die zu ersetzenden Zähne entsprechend modelliert werden können.

Schwierigkeiten ergeben sich jedoch dann, wenn nicht mehr vorhandene Zähne rekonstruiert werden müssen. Dies ist insbesondere bei verlorengegangenen Frontzähnen des Oberkiefers der Fall, da die Raumkoordinaten zur individuellen Festlegung der Unterkieferbewegungen fehlen. Üblicherweise wird etwa bei Verwendung eines Artikulators nach der DE-A 3 135 122 ein mit einer formbaren Masse bedeckter inzisaler Führungstisch mit Hilfe eines Stützstiftes eingefahren, indem die Teile des Artikulators gegeneinander bewegt werden, wobei die Zähne für die ordnungsgemäße Führung sorgen. Falls jedoch die Frontzähne des Oberkiefers fehlen, ist die anteriore Führung nicht mehr vorhanden, und der Führungstisch kann nicht mehr eingefahren werden. Zur Rekonstruktion der Zähne ist man deshalb mehr oder weniger auf Probieren angewiesen, was außerordentlich zeitraubend ist, da der Zahnersatz dem Patienten eingesetzt werden muß und erst dann überprüft werden kann, ob der Zahnersatz den speziellen Erfordernissen der anterioren Führung entspricht. Üblicherweise ist dabei der Zahnersatz mehrmals einzusetzen und wieder herauszunehmen, und das erzielte Endergebnis läßt sehr häufig zu wünschen übrig. Eine mehrdimensionale Ausmessung der Kieferbewegung, etwa nach der DE-A 3 123 526, hilft bei fehlenden Frontzähnen des Oberkiefers ebenfalls nicht weiter, da die anteriore Führung in diesem Fall nicht bestimmt werden kann.

Der vorliegenden Erfindung liegt nun die Aufgabe zugrunde, ein Verfahren und eine Vorrichtung zu schaffen, mit denen es möglich ist, die Frontzähne individuell derart nachzumodellieren, daß eine anteriore Führung erreicht wird, wie sie im natürlichen Zustand vorhanden war, und zwar auch dann, wenn die Frontzähne des Oberkiefers nicht mehr vorhanden sind.

Dabei soll dieses Verfahren in einfacher Weise insbesondere mit Hilfe eines konstruktiv einfachen Artikulators erfolgen, mit dem die natürlichen Kaubewegungen des zu behandelnden Patienten am Kiefermodell individuell nachvollzogen werden können.

Erfindungsgemäß wird dies dadurch erreicht, daß zum Modellieren der zu rekonstruierenden oberen Frontzähne in der sagittalen Ebene eines eingesetzten Kiefermodellabdrucks eine protrusive Konturkurve eines vorhandenen anderen Zahnes des Kiefermodellabdrucks durch Abtasten dieses Zahnes aufgenommen und mittels eines Übertragungswerkzeuges auf den zu ersetzenden Frontzahn in der sagittalen Ebene ausgehend vom Berührungspunkt der Unterkieferfrontzähne an den Oberkieferzähnen zur Formung ihrer palatinalen, konkav gekrümmten Oberfläche übertragen wird. Die Erfindung beruht dabei auf der Erkenntnis, daß die protrusiven Konturkurven der Zähne eines Individuums, die sich bei Sagittal-Vertikalschnitten an Ober- und Unterkiefer ergeben, an allen Zähnen gleichartig wiederkehren, so daß es möglich ist, auch bei vollständig verlorengegangenen Frontzähnen durch Abtastung der vorhandenen Zähne entsprechend dem erfindungsgemäßen Verfahren die palatinale Oberfläche bei den zu ersetzenden Frontzähnen derart zu erzeugen, daß eine anteriore Führung wiederhergestellt wird, wie sie im natürlichen Zustand vorhanden ist.

Eine alternative erfindungsgemäße Verfahrensweise besteht darin, daß zum Modellieren der zu rekonstruierenden oberen Frontzähne die Kurve der Gelenkbahn des Kondylus aufgenommen und mittels eines Übertragungswerkzeuges im Gelenk um den Faktor 4,5–8,5 verkleinert auf den zu ersetzenden Frontzahn in der sagittalen Ebene ausgehend vom Berührungspunkt der Unterkieferfrontzähne an den Oberkieferfrontzähnen zur Formung ihrer palatinalen, konkav gekrümmten Oberfläche übertragen wird. Dieses erfindungsgemäße Verfahren beruht auf der weiteren Erkenntnis, daß der Kurvenzug der Gelenkbahn des Kondylus und die protrusiven Konturkurven gemessen in der sagittalen Ebene eines vorhandenen Zahnes entsprechend der biomechanischen Kopplung der Frontzahn- und Kiefergelenkführung ineinander überführbar sind. Aufgrund dieser Erkenntnis ist es deshalb mit dem erfindungsgemäßen Verfahren möglich, selbst dann eine exakte anteriore Führung im Bereich der Frontzähne durch entsprechende Gestaltung der palatinalen konkaven Krümmung der Frontzähne des Oberkiefers zu erreichen, wenn überhaupt keine ursprünglichen Zähne mehr vorhanden sind.

Um die komplette dreidimensionale Formgestaltung der palatinalen konkaven Seite der Frontzähne des Oberkiefers zu erreichen, ist es erfindungsgemäß weiterhin zweckmäßig, wenn das Übertragungswerkzeug entlang der Verbindungslinie der Berührungspunkte der Unterkieferfrontzähne an den Oberkieferzähnen geführt wird.

Erfindungsgemäß ist es weiterhin vorteilhaft, wenn die Aufnahme der protrusiven Konturkurve bzw. der Kurve der Gelenkbahn des Kondylus mittels einer Schablone erfolgt, deren Form durch die Funktion einer Kettenlinie der Form y = a • cosh (x/a)–a bestimmt ist, wobei im Zahnbereich 1 ≤ a ≤ 6, vorzugsweise 2 ≤ a ≤ 3, oder im Gelenkbereich 4,5 ≤ a ≤ 52, vorzugsweise 9 ≤ a ≤ 25, ist.

Hierbei geht die Erfindung von der Feststellung aus, daß die in der sagittalen Ebene gemessene protrusive Konturkurve der Zähne sowie die Form der Gelenkbahn des Kondylus durch die vorstehende Kettenlinie (Katenate) exakt beschrieben werden können. Der Faktor a hängt dabei von den individuellen morphologischen Gegebenheiten des natürlichen Zahnes ab.

Hierbei basiert die Erfindung auf der Erkenntnis, daß für einen Faktor a im Bereich von 1 bis 100% aller möglichen Konturkurven der Zähne bzw. um den Faktor 4,5—8,5-fach größer alle Kurven der Gelenkbahnen umfaßt werden können. Indem erfindungsgemäß nunmehr eine Schablone verwendet werden kann, die die möglichen Kettenlinien mit den Faktoren 1 bis 6 umfaßt, kann durch Abtasten der Zähne mit Hilfe einer derartigen Schablone leicht die jeweilige individuelle Kurve festgestellt werden, ohne daß hierzu komplizierte Meßverfahren erforderlich sind. Im Gelenkbereich gilt das Entsprechende mit 4,5—8,5-fach größeren Kurven.

Die Übertragung der abgetasteten Gelenkbahn des Kondylus auf die palatinale Kontur der Frontzähne erfolgt gemäß folgender Funktion (Formel 1)

$$a^2 = \left( \frac{\sin^2 22^\circ}{2 \cdot (1 + \cos 22^\circ)} - \frac{1 - \cos 22^\circ}{1 + \cos 22^\circ} \sin^2 \alpha \right) \cdot r^2 ,$$

wobei r dem Krümmungsradius der Gelenkbahn und α dem initialen Neigungswinkel zur Funktionsebene entsprechen sowie eine Variation des Schwingbereichs von 22° ± 5° gilt. Hierdurch ist die Kopplung zwischen Gelenkkrümmung und Frontzahnkrümmung exakt gegeben.

Darüberhinaus können auf diese Weise krankhafte Veränderungen der Gelenkbahn beispielsweise erkannt werden, da sichergestellt ist, daß nicht krankhaft veränderte Kurven zur Rekonstruktion der Zähne benutzt werden. Aufgrund der vorstehenden Erkenntnis ist es ebenfalls möglich, die Gelenklagerung des Artikulators, die sogenannten Kondylenboxen, und ebenfalls die übrigen Führungselemente entsprechend der Schablone in verschiedenen Ausführungen entsprechend dem Faktor a = 4,5 bis 52 vorzufertigen, so daß sogar diese Elemente entsprechend den individuellen Erfordernissen im Artikulator eingesetzt werden können. Zur Durchführung des erfindungsgemäßen Verfahrens ist es wesentlich, daß das Abtasten der protrusiven Konturkurven in der sagittalen Ebene der Zähne jeweils nur an Abdrücken erfolgt, die dem idealen Zahnbogen entsprechend ausgerichtete Front- und Backenzähne aufweisen.

Weiterhin bezieht sich die Erfindung auf eine Vorrichtung zur Durchführun des Verfahrens gemäß der Erfindung. Diese Vorrichtung umfaßt einen Artikulator zur Darstellung der Bewegungen von Ober- und Unterkiefer, mit einem dem Unterkiefer entsprechenden Unterteil und einem dem Oberkiefer entsprechenden Oberteil, welche beide durch zwei Gelenke, den sogenannten Kondylenboxen, miteinander verbunden sind, wobei das vordere Ende der Artikulatorteile mit einem Stützstift bzw. einem Führungstisch versehen ist. Hierbei ist außerhalb der durch die Kondylenboxen gebildeten Schwenkachse eine Lagereinrichtung aus einem am Unterteil angeordneten unteren Lagerteil und einem am Oberteil befestigten oberen Lagerteil vorgesehen, wobei das untere Lagerteil in gleicher Höhe und in gleicher räumlicher Tiefe bezogen auf die Schwenkachse wie ein unterer Frontzahn derart angeordnet ist, daß die Oberkante des unteren Lagerteils der Oberkante des unteren Frontzahnes entspricht, sowie das obere Lagerteil in der gleichen Höhe wie ein oberer Frontzahn angeordnet ist, und an seinem unteren Ende mit einer gekrümmten Lagerfläche versehen ist, die der protrusiven Führungskontur des oberen Frontzahns entspricht und das obere Lagerteil 18 derart ausgerichtet ist, daß die Lagerfläche im Scheitelpunkt ihrer Führungskurve tangential in eine Gerade übergeht, die von der Oberkante des unteren Frontzahns durch die Schwenkachse der Kondylenboxen führt, so daß bei einer Bewegung der beiden Artikulatorteile gegeneinander eine der Natur entsprechende Grenzbewegung an Zähnen und Kiefergelenken zustandekommt.

Es lassen sich hierbei herkömmliche Artikulatoren verwenden, die lediglich durch die erfindungsgemäße Lagereinrichtung zu ergänzen sind.

Diese ist vorzugsweise in bezug zur Schwenkachse verstellbar angeordnet, wobei sie sich auch in der Höhe verstellen läßt. Die Verstellbarkeit ist erforderlich, um die Lagereinrichtung in eine Position bringen zu können, die durch den jeweiligen Patienten vorgegeben ist. Die Lagereinrichtung besteht demnach aus zwei Lagerteilen, wobei das obere die Form der protrusiven Konturkurven der Zähne aufweist. Das hiermit zusammenarbeitende untere Lagerteil kann aus einem einfachen Abtaststift gebildet sein, der in seiner Funktion der Unterkieferinzisalkante entspricht. Mit dieser Lagereinrichtung wird demzufolge die Funktion der Frontzähne nachgeahmt.

Die Konturkurven des oberen Lagerteiles entsprechen dabei vorzugsweise einer Kettenlinie der Form y = a • cosh (x/a)–a für 1 ≤ a ≤ 6. Diese ist für den jeweils zu behandelnden Patienten durch den Parameter a individuell bestimmt.

Das obere Lagerteil ist vorzugsweise austauschbar, so daß in einfacher Weise der Artikulator auf andere Patienten einstellbar ist.

Zweckmäßigerweise ist das obere Lagerteil um eine horizontale Achse parallel zur Schwenkachse des Unterkiefers schwenkbar, damit es sich in die erforderliche Stellung bewegen läßt.

Mit Vorzug ist an den Kondylenboxen ein um die durch sie erzeugte Schwenkachse schwenkbarer Bügel vorgesehen, welcher die Einrichtung des oberen Lagerteiles erleichtert, wobei der Bügel in der Ebene der Geraden verläuft. Dieser ist vorzugsweise entfernbar, so daß der Zugang zum Kiefermodell nicht behindert wird.

Zweckmäßigerweise befindet sich die erfindungsgemäße Lagereinrichtung in der Mittelachse des Artikulators bzw. des Kiefermodells. Hierdurch ist es möglich, daß außer der Protrusionsbewegung auch seitliche Bewegungen und Drehbewegungen naturgetreu nachvollzogen werden können.

Da das Artikulatoroberteil mit dem inzisalen Führungstisch und das dazugehörige Artikulatorunterteil mit einem Stützstift versehen sind, entspricht der eingefahrene Führungstisch in seiner Form der protrusiven Führungskontur der Frontzähne. Der Stützstift ist zum Einfahren zweckmäßigerweise mit einem dem Zahnbogen entsprechenden quer verlaufenden Bügel versehen, so daß beim Einfahren des Führungstischs allein durch die zweidimensionale, protrusive Bewegung eine dreidimensionale Führungsfläche im Führungstisch erzeugt wird.

Die beiden Artikulatorteile können durch Motoren gegeneinander bewegt werden. Es läßt sich auf diese Weise ein computergesteuertes Bewegungsmodell der Kiefer erzeugen.

Alternativ kann auch eine Vorrichtung zur Durchführung des erfindungsgemäßen Verfahrens benutzt werden, wobei im Oberteil eines Artikulators mit Kondylenboxen, die eine Schwenkachse bilden, ein Oberkiefermodell eingesetzt ist, wobei eine das Artikulatoroberteil überspannende, in den Kondylenboxen lagernde Brücke vorgesehen ist, auf welcher ein in Richtung der Brücke und senkrecht dazu frei verschiebbarer Taster zur Übertragung der protrusiven Konturkurven der oberen Frontzähne vorgesehen ist, und die Bewegungsrichtungen des Tasters in einer Ebene liegen, welche einerseits durch die Schwenkachse und andererseits durch den Wendepunkt der jeweiligen protrusiven Konturkurve der Frontzähne des Oberkiefers bestimmt ist, und am freien Ende des Tasters ein Tastelement vorgesehen ist, dessen Kontur entsprechend der protrusiven Führungskurve ausgebildet ist, und zwar vorzugsweise entsprechend der Form y = a · cosh (x/a)–a für 1 ≤ a ≤ 6, wobei das Tastelement derart befestigt ist, daß in der Nulleinstellung die Tangente im Scheitelpunkt der die Kontur bildenden Katenate die Schwenkachse schneidet.

Die Kurvenbestimmung erfolgt dabei in einfacher Weise durch Anlegen einer Schablone an einen Zahn und durch Vergleich der Kurve der Schablone mit der des Zahnes. Durch Vergleich der Schablone mit dem Tastelement läßt sich die Kurve auf diese Weise sehr leicht und schnell bestimmen. Mit Hilfe des ausgewählten Tastelementes läßt sich die Konturkurve auch auf den zu rekonstruierenden Zahn übertragen. Zweckmäßigerweise läßt sich diese Einrichtung an verschiedene Artikulatoren anpassen, die in der Breite üblicherweise unterschiedlich groß sind. Darüberhinaus ist auch eine Anpassung der Lagerung an verschiedene Kondylenboxen denkbar.

Das Tastelement läßt sich auch durch ein spanabhebendes Werkzeug, wie etwa Schleif- oder Fräseinrichtungen, ersetzen, die die Form der Konturkurven selbst aufweisen oder durch entsprechende Ansteuerung erzeugen, so daß die Konturkurve auch auf nicht elastische Werkstoffe übertragen werden kann.

Alle Bewegungen können dabei mit Hilfe von Motoren durchgeführt werden, welche beispielsweise durch einen Rechner angesteuert werden.

Vorteilhafte Ausführungsformen der Erfindung werden im Verlauf der nachfolgenden Beschreibung im einzelnen anhand der beiliegenden Zeichnungen erläutert. Dabei zeigen:

Fig. 1 eine schematische Abbildung eines Unterkiefers zur Darstellung der Position der Frontzähne,

Fig. 2 einen Schnitt durch einen Frontzahn mit einer darübergelegten Kurvenschar (y = a · cosh (x/a)-a),

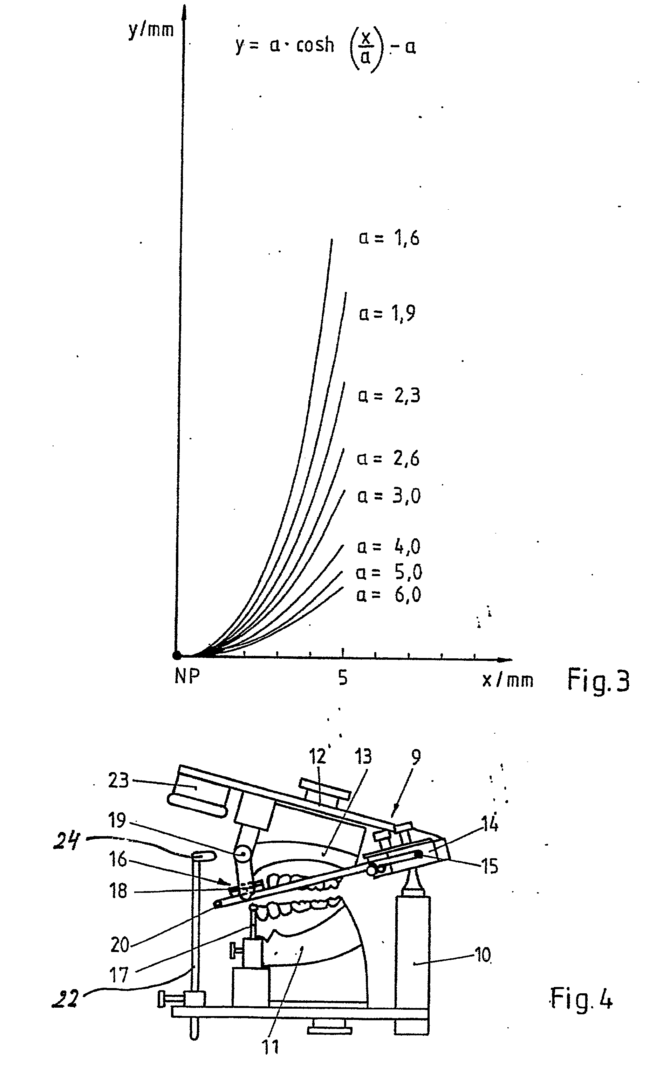

Fig. 3 eine aus Kettenlinien gebildete Kurvenschar,

Fig. 4 eine Seitenansicht des erfindungsgemäßen Artikulators mit einem eingesetzten Kiefermodell,

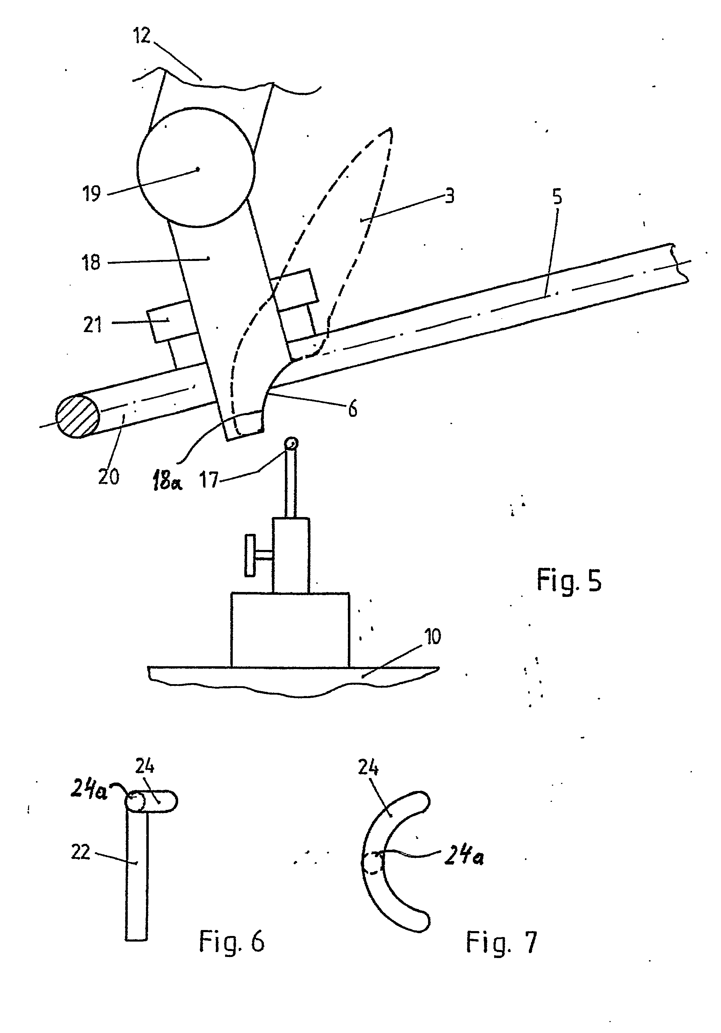

Fig. 5 eine Seitenansicht der erfindungsgemäßen dritten Lagereinrichtung, teilweise im Schnitt,

Fig. 6 eine Seitenansicht des mit einem den Zahnbogen entsprechenden Querbügel versehenen Stützstifts,

Fig. 7 eine Draufsicht auf den Stützstift gemäß Fig. 6,

Fig. 8 eine Seitenansicht einer erfindungsgemäßen Tasteinrichtung, welche mit einem Artikulatoroberteil zusammenarbeitet,

Fig. 9 eine Seitenansicht einer Schablone nach der Erfindung und

Fig. 10 eine Draufsicht auf die Tasteinrichtung gemäß Fig. 8.

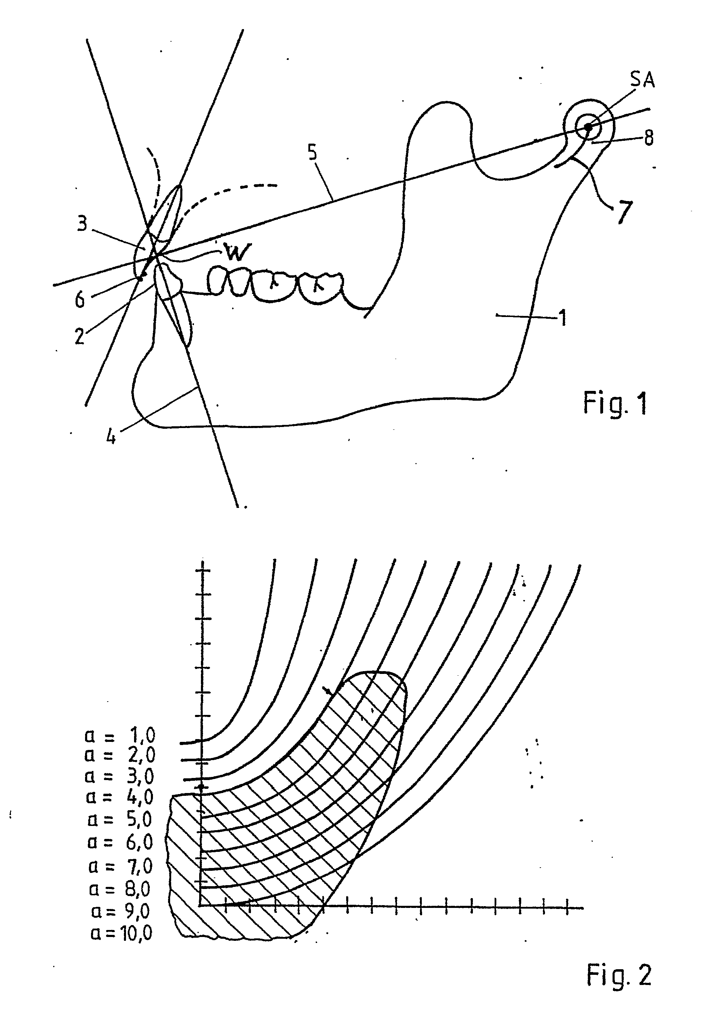

In Fig. 1 ist schematisch ein Unterkiefer mit einem Frontzahn 2 und ein Frontzahn 3 eines (nicht gezeichneten) Oberkiefers dargestellt. Diese Frontzähne sind hier in ihrer biomechanisch idealen Stellung gezeigt. Der untere Frontzahn 2 ist dabei so ausgerichtet, daß seine Längsachse 4 senkrecht zu einer Geraden 5 liegt, die von der Oberkante des Frontzahnes 2 durch einen Gelenkpunkt SA im Kiefergelenk (Kondylus) führt. Diese Gerade 5 ist zugleich die Wendetangente der protrusiven Führungskontur 6 mit ihrer palatinalen konkaven Krümmung 6 des oberen Frontzahnes 3. Der Kontur 6 entspricht die Gelenkbahn 7 des Kondylus 8, umgerechnet über die angegebene Formel (1). An diese Gegebenheiten ist der Artikulator, wie nachfolgend noch zu beschreiben ist, anzupassen.

Die ordnungsgemäße, gelenkbezogene Anbringung des Kiefermodells im Artikulator ist an sich bekannt und bedarf daher keiner weiteren Erläuterung.

Der Artikulator 9 ist größtenteils von herkömmlicher Bauart, so daß eine detaillierte Beschreibung an dieser Stelle nicht erforderlich ist. Er weist ein Unterteil 10 zur Aufnahme des Unterkiefermodells 11 und ein Oberteil 12 zur Aufnahme eines Oberkiefermodells 13 auf. Die Teile 10 und 12 sind durch Gelenke, d. h. durch Kondylenboxen 14, miteinander verbunden.

Beim vorliegenden Artikulator 9 ist vor einer durch die Kondylenboxen 14 gebildeten Schwenkachse 15, etwa im Bereich der Frontzähne des Kiefermodells, eine dritte Lagereinrichtung 16 vorgesehen. Diese Lagereinrichtung 16 bildet im wesentlichen die Funktion der oberen Frontzähne 3 nach.

Die Lagereinrichtung 16 ist im wesentlichen aus zwei Lagerteilen 17 und 18 gebildet. Das untere Lagerteil 17 ist dabei auf dem Artikulatorunterteil 10 angeordnet. Es ist dabei zweckmäßigerweise auf dem Unterteil verschiebbar angebracht, so daß sich der Lagerpunkt in die für das jeweilige Kiefermodell richtige Stellung bringen läßt. In dieser Stellung ist das Lagerteil 17 in gleicher Höhe und in gleicher räumlicher Tiefe bezogen auf die Schwenkachse des Artikulators wie der untere Frontzahn 2 angeordnet. Die Oberkante des Lagerteiles 17 entspricht dabei der Oberkante des Frontzahnes 2.

Das mit dem Lagerteil 17 zusammenarbeitende Lagerteil 18 ist am Artikulatoroberteil 12 ebenfalls verschiebbar angebracht. Es ist ebenfalls in der Höhe verstellbar, so daß sich das Lagerteil 18 in die gleiche Höhe wie der obere Frontzahn 3 bringen läßt. Zusätzlich ist das obere Lagerteil 18 um eine horizontale Achse 19 schwenkbar, die parallel zur Schwenkachse verläuft. Das Lagerteil 18 läßt sich dadurch in eine Stellung schwenken, die der des oberen Frontzahnes 3 entspricht.

Wie bereits aus Fig. 1 deutlich wird, ist die Wendetangente 5 der protrusiven Führungskontur 6 von besonderer Bedeutung, da diese durch den Gelenkpunkt SA des Kiefergelenkes 8 führen muß. Um das Lagerteil in einfacher Weise entsprechend einstellen zu können, ist am Artikulator um die Achse 15 schwenkbar, an den Kondylenboxen 14, ein Bügel 20 vorgesehen.

Das Lagerteil 18 ist am unteren Ende mit einer gekrümmten Lagerfläche 18a versehen, die der protrusiven Führungskontur 6 des oberen Frontzahnes 3 entspricht. Das Lagerteil 18 ist dabei so auszurichten, daß die Lagerfläche 18a im Scheitelpunkt ihrer Führungskurve tangential in die Gerade 5 übergeht.

Da die Ebene des Bügels 20 ebenfalls in der Geraden 5 verläuft, kann die Einstellung des Lagerteiles 18 erfolgen, indem es solange geschwenkt wird, bis es senkrecht zum Bügel 20 steht. Voraussetzung ist dabei, daß die Führungskontur 6 entsprechend im Lagerteil 18 angelegt ist. Um das Einstellen weiter zu erleichtern, sind am Lagerteil 18 bzw. am Bügel 20 Anschläge 21 vorgesehen. Nach der Einstellung des Lagerteiles 18 läßt sich der Bügel 20 vom Artikulator entfernen, um den Zugang zum Kiefermodell zu erleichtern.

Bei der Einstellung des Artikulators ist so vorzugehen, daß die protrusive Führungskontur 6 der Zähne bestimmt wird. Dies kann beispielsweise mit Hilfe von Sagittal-Vertikalschnitten an besonderen Orten, d. h. im Frontzahnbereich, beinahe beliebig und im Seitenzahnbereich über die Höckerspitzen, und zwar im Unterkiefer buccal und im Oberkiefer palatinal jeweils an den protrusiven Führungskonturen durch das Kiefermodell ausgehend von den Höckerspitzen erfolgen. Diese gemessenen Kurven können dann vergrößert werden. Die sich ergebende Kurve kann dann mittels einer vorgefertigten Kurvenschar individuell bestimmt werden, wie es etwa in Fig. 2 dargestellt ist. Hierbei ist anzumerken, daß hierzu die Schnitte durch einen beliebigen Zahn verwendet werden können, da die Kurven an allen Zähnen derselben Person gleichartig wiederkehren. Anhand der aufgefundenen Kurvenschar kann nunmehr ein entsprechendes Lagerteil 18 und zugleich eine geeignete Kondylenbox 14 bzw. eine entsprechende Einstellung einer solchen Box gewählt werden. Wie bereits gesagt, besteht zwischen der Kondylenbahn 7 und der protrusiven Führungskurve 6 ein fester mathematischer Zusammenhang. Die Form der Zähne bedingt daher die Form des Gelenkes abhängig von deren räumlicher Zuordnung.

Die Kurvenschar ist vorzugsweise aus Kettenlinien der Form $y = a \cdot \cosh(x/a) - a$ gebildet. Die Kurven unterscheiden sich dann interindividuell im Zahnbereich lediglich durch nur einen Parameter "a" Im Kiefergelenkbereich kann initial ein linearer Bereich enthalten sein. Würden beispielsweise Parabeln gewählt, so ergeben sich mehrere Parameter, was die Auswahl des Lagerteils 18 sehr viel komplizierter machte.

Nachdem die passenden Gelenkteile im Artikulator 9 eingebaut sind, wobei die Lagereinrichtung 16 der Frontzahnführung entspricht, ist der mit einer selbsthärtenden Formmasse versehende Führungstisch 23 in an sich bekannter Weise einzufahren. Hierbei ist so vorzugehen, daß mit dem Artikulator 9 eine protrusive Bewegung durchgeführt wird. Diese Bewegung ist durch die Führungskontur 18a des Lagerteils 18 bestimmt. Sie verläuft nur in einer Ebene und ist demzufolge zweidimensional. Durch die besondere Ausbildung des Stützstifts 22 ergibt sich im Führungstisch 23 bzw. in der formbaren Masse eine gekrümmte Fläche, die der Führungskontur 6 der Frontzähne entspricht. Der Führungsstift 22 ist dazu an seinem oberen Ende mit einem Bügel 24 versehen, der entsprechend dem Zahnbogen ausgebildet ist. Nach dem Aushärten der Formmasse läßt sich die Lagereinrichtung 16 entfernen, so daß der Artiltulator in bekannter Weise benutzt werden kann. Hierbei muß der Führungsstift 22 mit dem Bügel 24 im weiteren durch einen Führungsstift 22 mit einer Kugel 24a versehen sein entsprechend dem sagittalen Radius des Bügels 24. Hierbei ist zu beachten, daß die Form des Führungstisches auch dann erstellt werden kann, wenn keine Frontzähne oder gar keine Zähne mehr vorhanden sind.

Mit dem ordnungsgemäß eingestellten Artikulator lassen sich nunmehr naturgetreue, gemeinsame Grenzbewegungen an Zähnen und Kiefergelenken nachvollziehen, da sowohl das Gelenk (Kondylenbox) als auch die anteriore Führung den natürlichen Gegebenheiten entsprechen.

Wenn die Lagereinrichtung 16 in der Mittelachse des Artikulators 9 angeordnet ist, lassen sich auch seitliche Bewegungen und Drehbewegungen der Kiefer gegeneinander naturgetreu nachvollziehen.

Die naturgetreue Bewegungsnachbildung mit dem Artikulator ist von großer Bedeutung, da zu rekonstruierende Frontzähne des Oberkiefers üblicherweise am Kiefermodell modelliert werden. Die palatinalen Oberflächen der Frontzähne des Oberkiefers lassen sich hiermit in allen drei Dimensionen individuell funktionsgerecht wiederherstellen, was bisher nicht möglich war. Dies ist von besonderer Bedeutung, wenn fehlende Frontzähne nachgebildet werden müssen.

Die Artikulatorbewegungen können mit Motoren ausgefühlt werden, die insbesondere von einem Rechner anzusteuern sind. Es läßt sich auf diese Weise ein Kiefermodell mit originalgetreuen Kaubewegungen erstellen.

Darüberhinaus ist es möglich, die ermittelten Meßwerte, d. h. die protrusive Führungsbahn 6 und die funktionelle Gelenkbahn 7 des Kondylus mit einem Rechner zu vergleichen und Unstimmigkeiten aufzudecken.

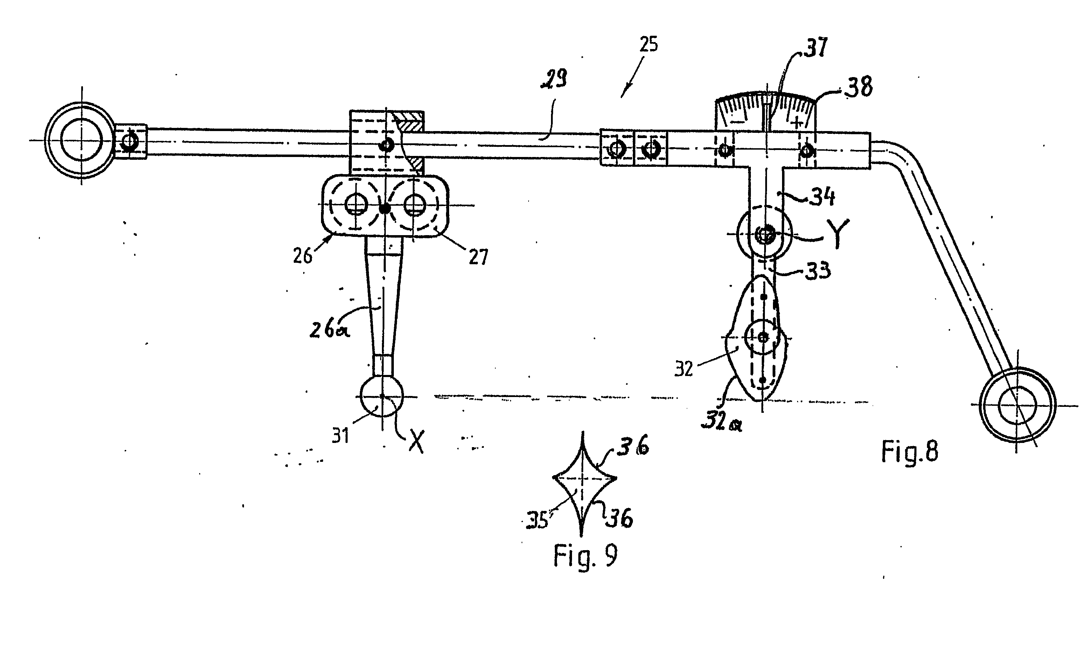

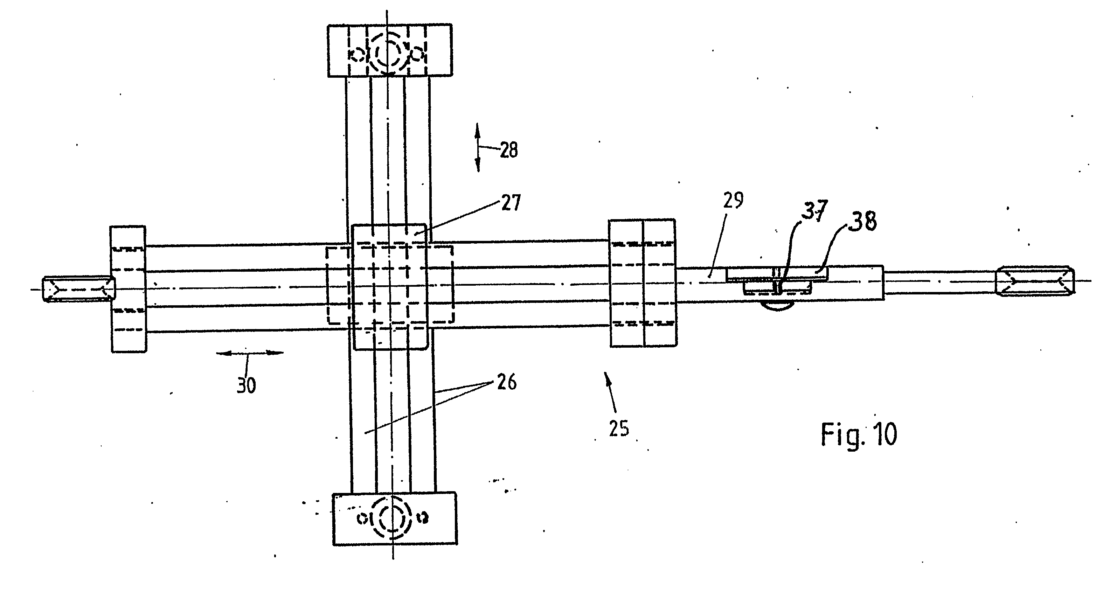

Eine andere vorteilhafte Vorrichtung zur Durchführung des Verfahrens nach der Erfindung ist in den Fig. 8 bis 10 dargestellt. Es handelt sich hier um eine Tasteinrichtung 25, welche eine Brücke 26 aufweist, die über senkrecht zur Brücke 26 verlaufende Lagerfortsätze 26a in Kondylenboxen eines Artikulatoroberteiles (nicht dargestellt) lagert. Auf dieser Brücke 26 ist ein Kreuzschlitten 27 geführt, welcher auf der Brücke 26 in Richtung des Pfeiles 28 frei verschiebbar ist. Senkrecht zu dieser Richtung ist im Kreuzschlitten 27 ein Taster 29 geführt, welcher in seiner Längsrichtung, d. h. in Richtung des Pfeiles 30, frei verschiebbar ist. Der Taster 29 läßt sich daher in einer Ebene frei bewegen. Durch Größe und Anordnung der in den nicht gezeigten Kondylenboxen liegenden Kugeln 31 ist diese Bewegungsebene einerseits durch die Schwenkachse 15 des Artikulators und andererseits durch die Wendepunkte (W) der protrusiven Konturkurven 6 des Frontzahnes bestimmt, siehe Fig. 1.

Am vorderen Ende ist der Taster 29 mit einem Tastelement 32 ausgestattet. Dieses Tastelement 32 ist aus einer Platte gebildet, wobei seine Kanten 32a einen Verlauf entsprechend den Konturkurven 6 aufweisen, wobei sich der Verlauf der Kanten aus der Beziehung $y = a \cdot cosh (x/a)-a$ bestimmt, mit $1 \leq a \leq 6$. Dieses Tastelement 32 ist zweckmäßigerweise austauschbar, so daß sich sehr leicht unterschiedliche Konturkurven, die aus der vorbestimmten Kurvenschar (siehe Fig. 2) ausgewählt sind, einsetzen lassen. Das Tastelement 32 ist an einem Halter 33 derart befestigt, daß in der Nulleinstellung die Tangente im Scheitelpunkt der Katenate die Scharnierachse X schneidet. Der Halter 33 ist seinerseits um eine Achse Y an einem Fortsatz 34 des Tasters 29 schwenkbar befestigt, wobei die Achsen X und Y parallel zur Brücke 26 verlaufen, so daß auch auf diese Weise eine Anpassung an unterschiedliche Gebißformen möglich ist. Der Halter 33 weist einen Zeiger 37 auf, der vor einer Skala 38 verläuft, die am Taster 29 befestigt ist.

Zur Abtastung der sagittalen protrusiven Führungskonturen, z. B. an den Seitenzähnen, wird zweckmäßigerweise eine Schablone 35 gemäß Fig. 9 verwendet, deren Kanten 36 im gezeigten Ausführungsbeispiel 4 komplementäre Führungskurven zu den Konturkurven 6 aufweisen. Hierbei wird so vorgegangen, daß die Schablone 35 über die Höckerspitze eines Seitenzahnes in der sagittalen Ebene angelegt wird, wobei es solange ausgetauscht wird, bis eine seiner Führungskurven der Kontur des Zahnes entspricht. Das der Schablone entsprechende Tastelement 32 wird ausgesucht und montiert. Mit diesem derart ausgewählten Tastelement 32 läßt sich nun die jeweils passende Konturkurve 6 beispielsweise auf einen Frontzahn 3 des Oberkiefers auf dessen palatinale Oberfläche übertragen, welcher im Kiefermodell üblicherweise aus Wachs modelliert ist. Es kann aber auch das Werkzeug 32 unmittelbar als Schablone verwendet werden.

Zur Bearbeitung anderer Materialien, wie etwa Metall oder Keramik, kann anstelle des Tastelementes 32 auch ein Schleif- oder Fräswerkzeug Anwendung finden, dessen Form der jeweils gewählten Konturkurve 6 entspricht. Dieses Werkzeug wird um die Achse Y am Fortsatz 34 schwenkbar befestigt. Es ist hierbei denkbar, alle Bewegungen über von einem Rechner gesteuerte Motoren zu bewerkstelligen.

Die Kugeln 31 sind austauschbar, so daß sich in einfacher Weise eine Anpassung der Tasteinrichtung 25 an unterschiedliche Artikulatoren vornehmen läßt.

Abwandlungen der Einrichtungen in den verschiedensten Weisen sind denkbar. Beispielsweise läßt sich, wie es in den Zeichnungen dargestellt ist, die Brücke 26 aus zwei parallelen Stangen aufbauen, auf welchen der Kreuzschlitten 27 hin- und herbewegbar ist. Auch der Taster 29 läßt sich in gleicher Weise aus zwei parallelen Stangen erstellen. Zur Lagerung des Kreuzschlittens können dabei Kugellager Verwendung finden. Eine derart ausgebildete Tasteinrichtung ist sehr einfach im Aufbau und zugleich sehr funktionssicher, wobei eine hohe Präzision erreicht wird.

In den dargestellten Ausführungsbeispielen sind stets Artikulatoren zum Übertragen der passenden Konturkurven 6 verwendet. Es liegt jedoch ebenfalls im Rahmen der Erfindung, wenn mittels einer elektronischen Datenverarbeitung die exakte Lage des Ober- und Unterkiefers simuliert wird und das Abtasten der individuellen sagittalen protrusiven Konturkurve elektronisch erfolgt und die Übertragung dieser Konturkurve auf die palatinale Oberfläche des oberen Frontzahnes oder ggf. auf zu rekonstruierende Seitenzähne mittels eines elektronisch gesteuerten Werkzeuges durchgeführt wird.

**Patentansprüche**

1. Verfahren zur Rekonstruktion von Frontzähnen des Oberkiefers, wobei Modellabdrücke des Ober- und Unterkiefers ohne den oder die zu rekonstruierenden Zähne in ihrer natürlichen Relation bezogen zu den Gelenken (Kondylen) und den skelettalen Schädelstrukturen in einem Artikulator eingesetzt und die zu rekonstruierenden Zähne modelliert werden, dadurch gekennzeichnet, daß zum Modellieren der zu rekonstruierenden oberen Frontzähne in der sagittalen Ebene eines eingesetzten Kiefermodellabdrucks eine protrusive Konturkurve eines vorhandenen anderen Zahnes des Kiefermodellabdruckes durch Abtasten dieses Zahnes aufgenommen und mittels eines Übertragungswerkzeuges auf den zu ersetzenden Frontzahn in der sagittalen Ebene ausgehend vom Berührungspunkt der Unterkiefer-Frontzähne (2) an den Oberkiefer-Frontzähnen (3) zur Formung ihrer palatinalen, konkav gekrümmten Oberfläche übertragen wird.

2. Verfahren zur Rekonstruktion von Frontzähnen des Oberkiefers, wobei Modellabdrücke des Ober- und Unterkiefers ohne den oder die zu rekonstruierenden Zähne in ihrer natürlichen Relation bezogen zu den Gelenken (Kondylen) und den skelettalen Schädelstrukturen in einen Artikulator eingesetzt und die zu rekonstruierenden Zähne modelliert werden, dadurch gekennzeichnet, daß zum Modellieren der zu rekonstruierenden oberen Frontzähne die Kurve der Gelenkbahn des Kondylus aufgenommen und mittels eines Übertragungswerkzeuges im Gelenk um den Faktor 4,5–8,5 verkleinert auf den zu ersetzenden Frontzahn in der sagittalen Ebene ausgehend vom Berührungspunkt der Unterkiefer-Frontzähne (2) an den Oberkiefer-Frontzähnen (3) zur Formung ihrer palatinalen, konkav gekrümmten Oberfläche übertragen wird.

3. Verfahren nach Anspruch 1 oder 2, dadurch gekennzeichnet, daß das Übertragungswerkzeug entlang der Verbindungslinie der Berührungspunkte der Unterkieferfrontzähne an den Oberkiefer-Frontzähnen (3) geführt wird und die Übertragung der abgetasteten Gelenkbahn des Kondylus auf die palatinale Kontur der Frontzähne gemäß der Funktion

$$a^2 = ( \frac{\sin^2 22^\circ}{2 \cdot (1+\cos 22^\circ)} - \frac{1-\cos 22^\circ}{1+\cos 22^\circ} \sin^2 \alpha ) \cdot r^2 ,$$

erfolgt, wobei r dem Krümmungsradius der Gelenkbahn und α dem initialen Neigungswinkel derselben zur Funktionsebene entsprechen, sowie eine Variation des Schwingbereiches von 22° ± 5° gilt.

4. Verfahren nach einem oder mehreren der Ansprüche 1 bis 3, dadurch gekennzeichnet, daß die Aufnahme der protrusiven Konturkurve bzw. der Kontur der Gelenkbahn mittels einer Schablone erfolgt, deren Form durch die Funktion einer Kettenlinie der Art y = a • cosh (x/a)–a im Zahnbereich für 1 ≤ a ≤ 6, vorzugsweise 2 ≤ a ≤ 3, oder im Gelenkbereich um den Faktor 4,5–8,5, vorzugsweise 5–7, verkleinert, bestimmt ist.

5. Verfahren nach einem oder mehreren der Ansprüche 1 bis 3, dadurch gekennzeichnet, daß die protrusive Konturkurve bzw. die Kurve der Gelenkbahn elektronisch aufgenommen wird oder aus vorgegebenen Kurven der Art y = a • cosh (x/a)–a für 1 ≤ a ≤ 6 durch Computerberechnungen ausgewählt wird und die jeweilige Konturkurve über elektronisch gesteuerte Übertragungswerkzeuge, insbesondere Kopierfräsern, übertragen wird.

6. Verfahren nach einem oder mehreren der Ansprüche 1 bis 5, dadurch gekennzeichnet, daß die protrusive Führungskontur der Zähne sowie die Gelenkbahn des Kondylus (8) ermittelt und die erhaltenen Meßwerte mit Hilfe eines Rechners verglichen und eine Gelenkfunktionsanalyse erstellt wird.

7. Verfahren nach einem oder mehreren der Ansprüche 1 bis 6, dadurch gekennzeichnet, daß die protrusive Führungskontur der Zähne sowie die Gelenkbahnen der Kondylen (8) ermittelt und die erhaltenen Meßwerte mit Hilfe eines Rechners verglichen und eine Okklusionsanalyse erstellt wird.

8. Vorrichtung zur Durchführung des Verfahrens nach einem oder mehreren der Ansprüche 1 bis 7 mit einem Artikulator (9) zur Darstellung der Bewegungen von Ober- und Unterkiefer, mit einem dem Unterkiefer entsprechenden Unterteil (10) und einem dem Oberkiefer entsprechenden Oberteil (12), welche beide durch zwei Gelenke (14), den sogenannten Kondylenboxen, miteinander verbunden sind, wobei das vordere Ende der Artikulatorteile (10, 12) mit einem Stützstift bzw. einem Führungstisch versehen ist, dadurch gekennzeichnet, daß außerhalb der durch die Kondylenboxen (14) gebildeten Schwenkachse (15) eine Lagereinrichtung (16) aus einem am Unterteil (10) angeordneten unteren Lagerteil (17) und einem am Oberteil (12) befestigten oberen Lagerteil (18) vorgesehen ist, wobei das untere Lagerteil (17) in gleicher Höhe und in gleicher räumlicher Tiefe bezogen auf die Schwenkachse (15) wie ein unterer Frontzahn (2) derart angeordnet ist, daß die Oberkante des unteren Lagerteils (17) der Oberkante des unteren Frontzahnes (2) entspricht sowie das obere Lagerteil (18) in der gleichen Höhe wie ein oberer Frontzahn (3) angeordnet ist, und an seinem unteren Ende mit einer gekrümmten Lagerfläche (18a) versehen ist, die der protrusiven Führungskontur (6) des oberen Frontzahnes (3) entspricht, und das obere Lagerteil (18)

derart ausgerichtet ist, daß die Lagerfläche (18a) im Scheitelpunkt ihrer Führungskurve tangential in eine Gerade (5) übergeht, die von der Oberkante des unteren Frontzahnes (2) durch die Schwenkachse (15) der Kondylenboxen (14) führt, so daß bei einer Bewegung der beiden Artikulatorteile (10, 12) gegeneinander eine der Natur entsprechende Grenzbewegung an Zähnen und Kieferngelenken zustandekommt.

9. Vorrichtung nach Anspruch 8, dadurch gekennzeichnet, daß die Form des Führungselementes (18) einer Kettenlinie der Form y = a • (x/a)-a entspricht für 1 ≤ a ≤ 6.

10. Vorrichtung nach einem oder mehreren der Ansprüche 8 oder 9, dadurch gekennzeichnet, daß die Lagereinrichtung (16) in bezug zur Schwenkachse (15) verstellbar angeordnet ist.

11. Vorrichtung nach einem oder mehreren der Ansprüche 8 bis 10, dadurch gekennzeichnet, daß die Lagereinrichtung (16) höhenverstellbar ist.

12. Vorrichtung nach einem oder mehreren der Ansprüche 8 bis 11, dadurch gekennzeichnet, daß das obere Lagerteil (18) um eine horizontale Achse (19) schwenkbar ist.

13. Vorrichtung nach einem oder mehreren der Ansprüche 8 bis 12, dadurch gekennzeichnet, daß das obere Lagerteil (18) austauschbar ist.

14. Vorrichtung nach einem oder mehreren der Ansprüche 8 bis 13, dadurch gekennzeichnet, daß der Artikulator (9) einen um die Achse (15) schwenkbaren Bügel (20) zur Einstellung des oberen Lagerteiles (18) aufweist, wobei der Bügel (20) in der Ebene der Gerade (5) verläuft.

15. Vorrichtung zur Durchführung des Verfahrens nach einem oder mehreren der Ansprüche 1 bis 7, wobei im Oberteil (12) eines Artikulators (9) mit Kondylenboxen (14), die eine Schwenkachse (15) bilden, ein Oberkiefermodell eingesetzt ist, gekennzeichnet durch eine das Artukulatoroberteil (12) überspannende, in den Kondylenboxen (14) lagernde Brücke (26), auf welcher ein in Richtung der Brücke und senkrecht dazu frei verschiebbarer Taster (29) zur Übertragung der protrusiven Konturkurven der oberen Frontzähne vorgesehen ist, wobei die Bewegungsrichtungen des Tasters (29) in einer Ebene liegen, welche einerseits durch die Schwenkachse (15) und andererseits durch den Wendepunkt (W) der jeweiligen protrusiven Konturkurve (6) der Frontzähne des Oberkiefers bestimmt ist, und am freien Ende des Tasters (29) ein Tastelement (32) vorgesehen ist, dessen Kontur entsprechend der protrusiven Führungskurve (6) ausgebildet ist, und zwar vorzugsweise entsprechend der Form y = a • cosh (x/a) a für 1 ≤ a ≤ 6, wobei das Tastelement (32) derart befestigt ist, daß in der Nulleinstellung die Tangente im Scheitelpunkt der die Kontur bildenden Katenate die Schwenkachse (15) schneidet.

16. Vorrichtung nach Anspruch 15, dadurch gekennzeichnet, daß das Tastelement (32) gegen andere Tastelemente mit Konturen unterschiedlicher Katenaten austauschbar ist.

17. Vorrichtung nach Anspruch 15 oder 16, dadurch gekennzeichnet, daß das Tastelement (32) am Ende des Tasters (2) um eine Achse (Y) parallel zur Brücke (26) verstellbar angeordnet ist.

18. Vorrichtung nach einem oder mehreren der Ansprüche 15 bis 17, dadurch gekennzeichnet, daß der Taster (29) in einem auf der Brücke (26) laufenden Kreuzschlitten (27) gelagert ist.

19. Vorrichtung nach einem oder mehreren der Ansprüche 15 bis 18, dadurch gekennzeichnet, daß das Tastelement (32) mehrere Kanten (32a) mit unterschiedlichen Konturkurven aufweist und entsprechend fixierbar angeordnet ist.

20. Vorrichtung nach einem oder mehreren der Ansprüche 15 bis 19, dadurch gekennzeichnet, daß die Lagerung (31) der Brücke (26) in Kondylenboxen an unterschiedliche Artikulatoren und an unterschiedliche Kondylenboxen anpaßbar ist.

21. Vorrichtung nach einem oder mehreren der Ansprüche 15 bis 20, dadurch gekennzeichnet, daß das Tastelement (32) am Ende des Tasters (29) durch ein Schleif- oder Fräswerkzeug gebildet ist.

22. Vorrichtung nach einem oder mehreren der Ansprüche 15 bis 21, dadurch gekennzeichnet, daß die Bewegungen des Tasters (29) und/oder des Werkzeuges durch Motoren erfolgen.

**Claims**

1. Method for reconstruction of front teeth of the maxilla, in which method model impressions of the maxilla and mandible are placed, without the tooth or teeth to be reconstructed, in an articulator in their natural relation relative to the joints (condyles) and the skeletal cranial structures, and the teeth to be reconstructed are modelled, characterized in that, for modelling of the front upper teeth to be reconstructed, in the sagittal plane of a used jaw model impression a protrusive contour curve of another tooth present on the jaw model impression is recorded by scanning of this tooth and is transferred by means of a transfer tool to the front tooth to be replaced in the sagittal plane starting from the point of contact between the mandibular front teeth (2) and the maxillary front teeth (3) for shaping of its palatal, concavely curved surface.

2. Method for reconstruction of front teeth of the maxilla, in which method model impressions of the maxilla and mandible are placed, without the tooth or teeth to be reconstructed, in an articulator in their natural relation with respect to the joints (condyles) and the skeletal cranial structures, and the teeth to be reconstructed are modelled, characterized in that, for modelling of the front upper teeth to be reconstructed, the curve of the condyle path is recorded and is transferred by means of a transfer tool, reduced by a factor of 4.5–8.5 in the joint, to the front tooth to be replaced in the sagittal plane starting from the point of contact between the mandibular front teeth (2) and the maxillary front teeth (3) for shaping of its palatal, concavely curved surface.

3. Method according to Claim 1 or 2, characterized in that the transfer tool is guided along the connection line of the contact points between the mandibular front teeth and the maxillary front teeth (3), and the transfer of the scanned condyle path to the palatal contour of the front teeth is carried out according to the function

$$a^2 = ( \frac{\sin^2 22^\circ}{2 \cdot (1+\cos 22^\circ)} - \frac{1-\cos 22^\circ}{1+\cos 22^\circ} \sin^2 \alpha ) \cdot r^2 ,$$

in which r corresponds to the radius of curvature of the joint path and $\alpha$ corresponds to the initial inclination angle of the latter to the functional plane, and there is a variation in the pivot range of $22^\circ \pm 5^\circ$.

4. Method according to one or more of Claims 1 to 3, characterized in that the recording of the protrusive contour curve or the contour of the joint path is carried out by means of a template, whose shape is determined by the function of a catenary line of the type $y = a \cdot \cosh(x/a) - a$ in the tooth area for $1 \le a \le 6$, preferably $2 \le a \le 3$, or in the joint area reduced by the factor of 4.5–8.5, preferably 5–7.

5. Method according to one or more of Claims 1 to 3, characterized in that the protrusive contour curve or the curve of the joint path is recorded electronically or is selected by computer calculations from predetermined curves of the type $y = a \cdot \cosh(x/a) - a$ for $1 \le a \le 6$, and the respective contour curve is transferred by means of electronically controlled transfer tools, in particular profile mills.

6. Method according to one or more of Claims 1 to 5, characterized in that the protrusive guide contour of the teeth and also the condyle (8) path of the condyle (8) are determined, and the measurement values obtained are compared with the aid of a computer, and a joint fonction analysis is prepared.

7. Method according to one or more of Claims 1 to 6, characterized in that the protrusive guide contour of the teeth and also the condyle (8) paths are determined, and the measurement values obtained are compound are compared with the aid of a computer, and an occlusion analysis is prepared.

8. Device for carrying out the method according to one or more of Claims 1 to 7, with an articulator (9) for representing the movements of the maxilla and mandible, with a lower part (10) corresponding to the mandible and an upper part (12) corresponding to the maxilla, which two parts are connected to each other by means of two joints (14), the so-called condyle boxes, in which respect the front end of the articulator parts (10, 12) is provided with a support pin and a guiding table, characterized in that, outside the pivot axis (15) formed by the condyle boxes (14), a bearing device (16) is provided, which consists of a lower bearing part (17) arranged on the lower part (10) and an upper bearing part (18) secured on the upper part (12), in which respect the lower bearing part (17) is arranged at the same level and at the same spatial depth relative to the pivot axis (15) as a lower front tooth (2) in such a way that the upper edge of the lower bearing part (17) corresponds to the upper edge of the lower front tooth (2), and the upper bearing part (18) is arranged at the same level as an upper front tooth (3) and is provided at its lower end with a curved bearing surface (18a) which corresponds to the protrusive guide contour (6) of the upper front tooth (3), and the upper bearing part (18) is aligned in such a way that the bearing surface (18a) at the summit of its guide curve merges tangentially into a straight line (5) which runs from the upper edge of the lower front tooth (2) through the pivot axis (15) of the condyle boxes (14) so that, upon a movement of the two articulator parts (10, 12) towards each other, a natural limit movement is achieved with regard to the teeth and jaw joints.

9. Device according to Claim 8, characterized in that the shape of the guide element (18) corresponds to a catenary line of the form $y = a \cdot \cosh(x/a) - a$ for $1 \le a \le 6$.

10. Device according to one or more of Claims 8 or 9, characterized in that the bearing device (16) is designed so as to be adjustable relative to the pivot axis (15).

11. Device according to one or more of Claims 8 to 10, characterized in that the bearing device (16) can be vertically adjusted.

12. Device according to one or more of Claims 8 to 11, characterized in that the upper bearing part (18) is pivotable about a horizontal axis (19).

13. Device according to one or more of Claims 8 to 12, characterized in that the upper bearing part (18) can be exchanged.

14. Device according to one or more of Claims 8 to 13, characterized in that the articulator (9) has a bar (20) pivotable about the axis (15) for adjustment of the upper bearing part (18), in which respect the bar (20) extends in the plane of the straight line (5).

15. Device for carrying out the method according to one or more of Claims 1 to 7, in which respect a maxilla model is placed in the upper part (12) of an articulator (9) with condyle boxes (14) which form a pivot axis (15), characterized by a bridge (26) spanning the upper part (12) of the articulator and supported in the condyle boxes (14), on which bridge a tracer (29) freely displaceable in the direction of the bridge and vertically thereto is provided for the purpose of transferring the protrusive contour curves of the upper front teeth, in which respect the movement directions of the tracer (29) lie in a plane which is determined on the one hand by the pivot axis (15) and on the other hand by the turning point (W) of the respective protrusive contour curve (6) of the front teeth of the maxilla, and at the free end of the tracer (29) a tracer element (32) is provided whose contour is designed according to the protrusive guide curve (6), and preferably according to the form y = a • cosh (x/a)–a for $1 \leq a \leq 6$, in which respect the tracer element (32) is secured in such a way that, in the zero setting, the tangent intersects the pivot axis (15) at the summit of the catenary line forming the contour.

16. Device according to Claim 15, characterized in that the tracer element (32) can be replaced by other tracer elements with contours of different catenary lines.

17. Device according to Claim 15 or 16, characterized in that the tracer element (32) at the end of the tracer (2) is designed so as to be adjustable about an axis (Y) parallel to the bridge (26).

18. Device according to one or more of Claims 15 to 17, characterized in that the tracer element (29) is supported in a cross slide (27) running on the bridge (26).

19. Device according to one or more of Claims 15 to 18, characterized in that the tracer element (32) has several edges (32a) with different contour curves and is designed to be correspondingly fixable.

20. Device according to one or more of Claims 15 to 19, characterized in that the bearing (31) of the bridge (26) in condyle boxes is adaptable to different articulators and to different condyle boxes.

21. Device according to one or more of Claims 15 to 20, characterized in that the tracer element (32) at the end of the tracer (29) is formed by means of a grinding or milling tool.

22. Device according to one or more of Claims 15 to 21, characterized in that the movements of the tracer (29) and/or of the tool are effected by motors.

**Revendications**

1. Procédé pour la reconstitution des dents frontales de la mâchoire supérieure selon lequel on place des empreintes modèles des mâchoires supérieure et inférieure, sans la ou les dents à reconstituer, dans leur relation naturelle par rapport aux articulations (condyles) et aux structures du squelette du crâne, dans un articulateur et on modélise les dents à reconstituer, caractérisé en ce que, pour la modélisation des dents frontales à reconstituer, il est réalisé, dans le plan saggital d'une empreinte insérée d'un modèle de mâchoire, une courbe des contours en protrusion d'une autre dent existante de l'empreinte par palpage de cette dent et que celle-ci est transférée, au moyen d'un outil de transfert, sur la dent frontale à remplacer dans le plan saggital, en partant du point de contact des dents frontales (2) de la mâchoire intérieure avec les dents (3) de la mâchoire supérieure pour former leur surface palatine de courbure concave.

2. Procédé de reconstitution des dents frontales de la mâchoire supérieure selon lequel on place des empreintes modèles des mâchoires supérieure et inférieure, sans la ou les dents à reconstituer, dans leur relation naturelle par rapport aux articulations (condyles) et aux structures du squelette du crâne, dans un articulateur et on modélise les dents à reconstituer, caractérisé en ce que, pour la modélisation des dents frontales à reconstituer, la courbe de la trajectoire du mouvement de l'articulation du condyle est réalisée et, réduite au moyen d'un outil de transfert dans l'articulation d'un facteur 4,5–8,5, transférée sur la dent frontale à remplacer dans le plan sagittal, en partant du point de contact des dents frontales (2) de la mâchoire inférieure avec les dents frontales (3) de la mâchoire supérieure pour former leur surface palatine de courbure concave.

3. Procédé selon la revendication 1 ou 2, caractérisé en ce que l'outil de transfert est déplacé le long de la ligne de connexion des points de contact des dents frontales de la mâchoire inférieure avec les dents frontales (3) de la mâchoire supérieure, et que le transfert de la trajectoire du mouvement de l'articulation du condyle palpé sur le contour palatin des dents frontales est exécuté selon la formule

$$a^2 = (\frac{\sin^2 22^O}{2 \cdot (1+\cos 22^O)} - \frac{1-\cos 22^O}{1+\cos 22^O} \sin^2 \alpha) \cdot r^2,$$

r correspondant au rayon de courbure de ladite trajectoire et $\alpha$ à l'angle d'inclinaison initial de celle-ci par rapport au plan de fonction, dès lors qu'une variation du domaine d'oscillation de $22° \pm 5°$ existe

4. Procédé selon l'une ou plusieurs des revendications 1 à 3, caractérisé en ce que le traçage de la courbe de protrusion des contours ou des contours de ladite trajectoire d'articulation est exécutée avec un patron dont la forme est déterminée par une fonction chaînette du genre y = a • cosh (x/a)–a dans la région de la dent pour $1 \leq a \leq 6$, de préférence $2 \leq a \leq 3$ ou bien réduite du facteur 4,5–8,5 ou, de préférence 5–7 dans la région de l'articulation.

5. Procédé selon l'une ou plusieurs des revendications 1 à 3, caractérisé en ce que la courbe de protrusion des contours ou la courbe de ladite trajectoire est tracée de manière électronique ou choisie parmi des courbes données du genre y = a • cosh (x/a)–a pour $1 \leq a \leq 6$ par calcul d'ordinateur et que la courbe des contours ainsi déterminée est transférée au moyen d'outils de transfert à commande électronique, en particulier des fraiseuses de reproduction.

6. Procédé selon l'une ou plusieurs des revendications 1 à 5, caractérisé en ce que les contours de guidage des dents en protrusion, ainsi que la trajectoire du mouvement de l'articulation du condyle (8) sont déterminés, que les valeurs obtenues sont comparées à l'aide d'un ordinateur et qu'une analyse de fonctionnement de l'articulation est établie.

7. Procédé selon l'une ou plusieurs des revendications 1 à 6, caractérisé en ce que les contours de guidage des dents en protrusion, ainsi que les trajectoires du mouvement des articulations des condyles (8) sont déterminés, que les valeurs obtenues sont comparées à l'aide d'un ordinateur et qu'une analyse d'occlusion est effectuée.

8. Dispositif pour l'exécution du procédé selon l'une ou plusieurs des revendications 1 à 7, comprenant, pour représenter les mouvements de la mâchoire supérieure et inférieure, un articulateur (9) muni d'une partie inférieure (10) correspondant à la mâchoire inférieure et d'une partie supérieure (12) correspondant à la mâchoire supérieure, ces deux parties étant reliées par deux articulations (14) appelées boîtes de condyles, l'extrémité antérieure des parties de l'articulateur (10, 12) étant munie d'une cheville de support ou d'une face de guidage, caractérisé en ce qu'à l'extérieur de l'axe de pivotement (15), constitué par les boîtes de condyles (14), il est prévu un élément palier (16) constitué d'une partie inférieure (17), disposée sur la partie inférieure (10) et d'une partie supérieure (18) fixée sur la partie supérieure (12), la partie palier inférieure (17) étant disposée à la même hauteur et à la même profondeur spatiale par rapport à l'axe de pivotement (15) qu'une dent frontale inférieure (2), de manière à ce que le bord supérieur de la partie palier inférieure (17) corresponde au bord supérieure de la dent frontale inférieure (2) et la partie palier supérieure (18) étant disposée à la même hauteur qu'une dent frontale supérieure (3) et munie à son extrémité inférieure d'une surface d'appui infléchie (18a) qui correspond au contour de guidage en protrusion (6) de la dent frontale supérieure (3), et que la partie palier supérieure (18) est orientée de manière telle que la surface de support (18a) se change tangentiellement, au sommet de sa courbe de guidage, en une droite (5) passant du bord supérieure de la dent frontale inférieure (2) à travers l'axe de pivotement (15) des boîtes de condyle (14), de manière à ce que, lorsque les deux parties (10, 12) de l'articulateur se rapprochent, il se produise un mouvement limite commun des dents et des articulations de la mâchoire correspondant au mouvement naturel.

9. Dispositif selon la revendication 8, caractérisé en ce que la forme de l'élément de guidage (18) correspond à une chaînette ayant la forme $y = a \cdot \cosh(x/a) - a$ pour $1 \leq a \leq 6$.

10. Dispositif selon l'une ou plusieurs des revendications 8 ou 9, caractérisé en ce que l'élément palier (16) est réglable par rapport à l'axe de pivotement (15).

11. Dispositif selon l'une ou plusieurs des revendications 8 à 10, caractérisé en ce que la hauteur de l'élément palier (16) est réglable.

12. Dispositif selon l'une ou plusieurs des revendications 8 à 11, caractérisé en ce que l'élément palier supérieur (18) est pivotable autour d'un axe horizontal (19).

13. Dispositif selon l'une ou plusieurs des revendications 8 à 12, caractérisé en ce que l'élément palier supérieur (18) est interchangeable.

14. Dispositif selon l'une ou plusieurs des revendications 8 à 13, caractérisé en ce que l'articulateur (9) possède un étrier (20) pivotable autour de l'axe (15) pour le réglage de l'élément palier supérieur (18), l'étrier s'étendant dans la plan de la droite (5).

15. Dispositif pour l'exécution du procédé selon l'une ou plusieurs des revendications 1 à 7, un modèle de la mâchoire supérieure étant placé dans la partie supérieure (12) d'un articulateur (9) muni de boîtes de condyles (14), caractérisé par un pont (26) s'étendant au-dessus de la partie supérieure (12) de l'articulateur et porté par les boîtes de condyles (14), sur lequel est prévu un palpeur (29) déplaçable librement dans la direction du pont et perpendiculairement à cette direction pour le transfert des courbes des contours en protrusion des dents frontales supérieures, les directions de mouvement du palpeur (29) étant situées dans un plan déterminé, d'une part par l'axe de pivotement (15) et d'autre part, par le point de retour (W) de la courbe des contours en protrusion (6) des dents frontales de la mâchoire supérieure, et en ce qu'a l'extrémité du palpeur (29), il est prévu un élément palpeur (32) dont le contour correspond à la courbe de guidage en protrusion (6) de préférence selon la forme $y = a \cdot \cosh(x/a) - a$ pour $1 \leq a \leq 6$, l'élément palpeur (32) étant fixé de manière à ce que, en réglage zéro, la tangente coupe l'axe de pivotement (15) au sommet de la chaînette formant le contour.

16. Dispositif selon la revendication 15, caractérisé en ce que l'élément palpeur (32) peut être échangé contre d'autres éléments palpeurs possédant les contours d'autres chaînettes.

17. Dispositif selon la revendication 15 ou 16, caractérisé en ce que l'élément palpeur (32) à l'extrémité du palpeur (29) est monté réglable autour d'un axe (Y), parallèlement au pont (26).

18. Dispositif selon l'une ou plusieurs des revendications 15 à 17, caractérisé en ce que le palpeur (29) repose dans un chariot à croix (27) se déplaçant sur le pont (26).

19. Dispositif selon l'une ou plusieurs des revendications 15 à 18, caractérisé en ce que l'élément palpeur (32) possède plusieurs arêtes (32a) ayant des courbes de contours différentes et est monté de manière à pouvoir être fixé en conséquence.

20. Dispositif selon l'une ou plusieurs des revendications 15 à 19, caractérisé en ce que la disposition des paliers (31) du pont (26) dans des boîtes de condyles est adaptable à différents articulateurs et à différentes boîtes de condyles.

21. Dispositif selon l'une ou plusieurs des revendications 15 à 20, caractérisé en ce que l'élément palpeur (32) à l'extrémité du palpeur (29) est constitué par un outil de ponçage ou de fraisage.

22. Dispositif selon l'une ou plusieurs des revendications 15 à 21, caractérisé en ce que les mouvements du palpeur (29) et/ou de l'outil sont effectués au moyen de moteurs.

Fig. 1

a = 1,0
a = 2,0
a = 3,0
a = 4,0
a = 5,0
a = 6,0
a = 7,0
a = 8,0
a = 9,0
a = 10,0

Fig. 2

$$y = a \cdot \cosh \left(\frac{x}{a}\right) - a$$

Fig. 3

Fig. 4

12

19

18

21

3

5

6

20

18a    17

10

Fig. 5

24
24a

22

24

24a

Fig. 6

Fig. 7

Fig.8

Fig. 9

EP 0 229 266 B1

Fig. 10

EP 0 229 266 B1